Europäisches Patentamt

European Patent Office

Office européen des brevets

(19)

(11) **EP 0 880 835 B1**

(12) **EUROPÄISCHE PATENTSCHRIFT**

(45) Veröffentlichungstag und Bekanntmachung des Hinweises auf die Patenterteilung:
**23.04.2003 Patentblatt 2003/17**

(21) Anmeldenummer: **97914148.8**

(22) Anmeldetag: **13.02.1997**

(51) Int Cl.[7]: **H04J 14/02**, H04Q 11/00

(86) Internationale Anmeldenummer:
**PCT/DE97/00280**

(87) Internationale Veröffentlichungsnummer:
**WO 97/030529 (21.08.1997 Gazette 1997/36)**

(54) **WDM-KOPPELANORDNUNG**

WDM SWITCHING NETWORK

RESEAU DE CONNEXION MRL

(84) Benannte Vertragsstaaten:
**CH DE FR GB IT LI NL**

(30) Priorität: **16.02.1996 DE 19605808**

(43) Veröffentlichungstag der Anmeldung:
**02.12.1998 Patentblatt 1998/49**

(73) Patentinhaber: **SIEMENS AKTIENGESELLSCHAFT**
**80333 München (DE)**

(72) Erfinder: **BISCHOFF, Mathias**
**D-81375 München (DE)**

(56) Entgegenhaltungen:
**EP-A- 0 642 288**

• **IEEE INFOCOM '93, Bd. 2, 28.März 1993, SAN FRANCISCO US, Seiten 578-585, XP000399037 LEE ET AL.: "Routing and switching in a wavelength convertible optical network"**
• **INTERNATIONAL SWITCHING SYMPOSIUM, Bd. 2, 25.Oktober 1992, YOKOHAMA JP, Seiten 352-356, XP000337742 CHIDGEY ET AL.: "Wavelength and space switched optical networks and nodes"**
• **IEICE TRANSACTIONS ON COMMUNICATIONS, Bd. E77-B, Nr. 10, Oktober 1994, TOKYO JP, Seiten 1220-1229, XP000492774 WATANABE ET AL.: "Optical path cross-connect node architecture with high modularity for photonic transport networks"**
• **IEEE COMMUNICATIONS MAGAZINE, Bd. 33, Nr. 11, November 1995, NEW YORK US, Seiten 84-88, XP000545290 DERR ET AL.: "An optical infrastructure for future telecommunications networks" in der Anmeldung erwähnt**

**Beschreibung**

Moderne, zukunftssichere optische Weitverkehrsnetze haben hohe Anforderungen bezüglich Kapazität, Flexibilität, Zuverlässigkeit und Transparenz zu erfüllen. Diese Anforderungen an ein Transportnetz werden bei einer Übertragung und Vermittlung der Daten im optischen Frequenzmultiplex optimal erfüllt. Beim optischen Frequenzmultiplex (Wellenlängenmultiplex - WDM) ist auf einer Faser eine Mehrzahl von Übertragungskanälen gebündelt, die durch ihre sich untereinander um einige 100 GHz unterscheidenden optischen Trägerfrequenzen (Wellenlängen) voneinander getrennt sind. Die Zahl der maximal möglichen Kanäle wird dabei durch die Verstärkungsbandbreite optischer Verstärker begrenzt.

Photonische Netze mit hochbitratigen, fasergebundenen Übertragungsstrecken, optischem Frequenzmultiplex (Wellenlängenmultiplex - WDM) und WDM-Koppelanordnungen zum semipermanenten Koppeln von optischen Kanälen als die zukünftigen Transportnetze der Telekommunikationsanbieter werden vorerst als Overlay Networks zu installieren sein, auf die sich die heute bestehende Netze abstützen; der stetig wachsende Bedarf an Übertragungskapazität wird zu einem kontinuierlichen Ausbau der photonischen Netze führen.

Als WDM-Koppelanordnungen zum semipermanenten und blockierungsfreien Koppeln von optischen Kanälen werden sog. optische Cross-Connects (OCC) vorgesehen. Solche optischen Cross-Connects weisen in der Regel sowohl eine Frequenz- als auch eine Raumschaltstufe auf.

Aus ICC'93 Conf.Rec. Vol.3/3, 1300 ... 1307, Fig.10, ist in diesem Zusammenhang eine WDM-Koppelanordnung mit eingangsseitigen, jeweils das auf der zugehörigen Eingangsfaser ankommende optische Signal nach Wellenlängen aufteilenden Wellenlängen-Demultiplexern, einer nachfolgenden Raumkoppelanordnung (Space Switch), nachfolgenden, die jeweils ankommende Wellenlänge auf die jeweilige abgehende Wellenlänge umsetzenden einstellbaren Wellenlängen-Konvertern und ausgangsseitigen, die ihnen zugeführten Wellenlängen zusammenfassenden Wellenlängen-Multiplexern bekannt.

Aus ntz 46(1993)1, Seiten 16...21, Bild 13 und 14, sind WDM-Koppelanordnungen bekannt, bei denen ebenfalls eingangsseitige Wellenlängen-Demultiplexer (1/N in Bild 13; unbenannt in Bild 14), ausgangsseitige Wellenlängen-Multiplexer (N/1 in Bild 13; unbenannt in Bild 14), Wellenlängen-Konverter (Frequenzstufen in Bild 13; Filter und Frequenzumsetzer in Bild 14) zur Wellenlängenumsetzung auf die jeweils abgehende Wellenlänge sowie eine dazwischenliegende Raumkoppelanordnung (Raumstufe in Bild 13; Faserschalter in Bild 14) vorgesehen sind.

Aus US-A-5 241 409 ist eine Koppelanordnung bekannt, bei der (gemäß Fig. 3) wellenlängenindividuelle Raumkoppelvielfache (70) zu Wellenlängen-Multiplexern (59) führen.

Aus US-A-5 194 977 ist eine Koppelanordnung (23 in FIG.2) mit Wellenlängen-Konvertern (17-1 ... 17-4) bekannt.

Die in WDM-Koppelanordnungen vorgesehenen Wellenlängen-Konverter (optische Frequenzkonverter) ermöglichen es, in photonischen Netzen die Blockierwahrscheinlichkeit für neu einzurichtende Verbindungen auch bei hoher Netzauslastung gering zu halten. Optische Frequenz-Konverter stellen allerdings auf der einen Seite relativ teuere Subsysteme dar, während auf der anderen Seite eine Verbindung nicht in jeder WDM-Koppelanordnung tatsächlich einer Frequenzkonversion bedürfen wird. Um dem Rechnung zu tragen, kann man in einer WDM-Koppelanordnung bedarfsweise in eine Verbindung einschaltbare Frequenzkonverter vorsehen.

Bei einer WDM-Koppelanordnung mit p eingangsseitigen, jeweils das auf der zugehörigen Eingangsfaser ankommende n-Kanäle-WDM-Signal nach Wellenlängen (optischen Frequenzen) aufteilenden Wellenlängen-Demultiplexern, einer nachfolgenden Raumkoppelanordnung (Space Switch) und p ausgangsseitigen, die ihnen zugeführten n optischen Signale zu einem n-Kanäle-WDM-Signal zusammenfassenden Wellenlängen-Multiplexern ist es in diesem Zusammenhang bereits bekannt, Wellenlängen-Konverter in einem zwischen zusätzlichen Ausgängen und Eingängen der Raumkoppelanordnung liegenden Wellenlängen-Konverter=Pool . vorzusehen und daraus einen Wellenlängen-Konverter nur bei Bedarf in eine über die WDM-Koppelanordnung geführte Verbindung einzuschleifen (OFC'95 Technical Digest, 271 ... 272; IEEE Commmunications Magazine, Nov.95, 84 ... 88).

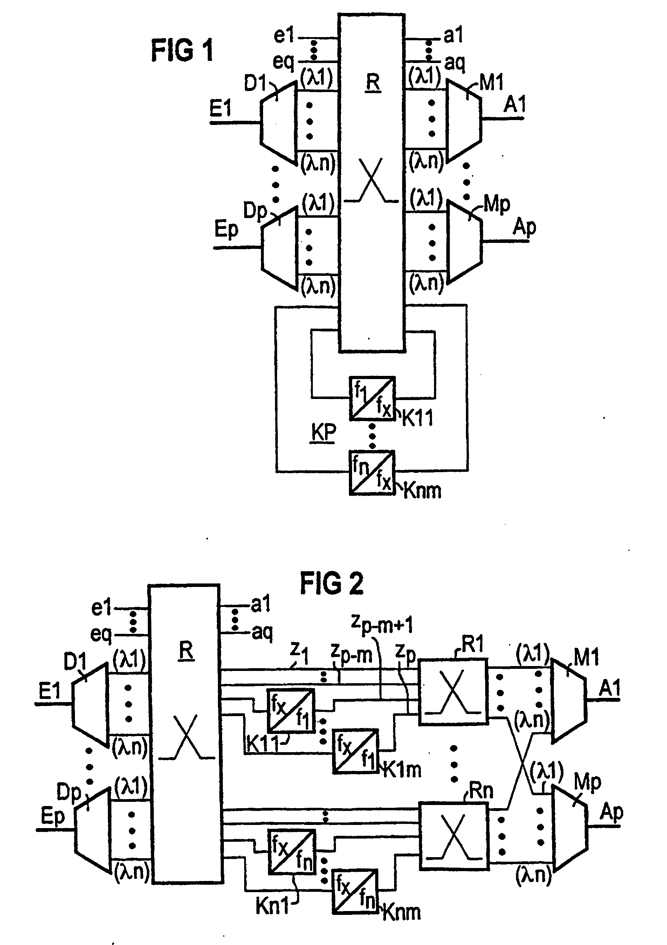

Eine solche WDM-Koppelanordnung ist in FIG 1 skizziert. Diese WDM-Koppelanordnung weist zunächst einmal p Eingangsports und p Ausgangsports mit daran angeschlossenen Eingangs- bzw. Ausgangsfasern E1, ..., Ep bzw. A1, ..., Ap für WDM-Signale (optische Frequenzmultiplexsignale mit jeweils n optischen Kanälen sowie eingangs- und ausgangsseitig jeweils q Ports e1, .. .., eq bzw. a1, ..., aq für einkanalige Signale auf. Die p Eingangsfasern E1, ..., Ep führen jeweils zu einem Wellenlängen-Demultiplexer D1, ..., Dp, der das am jeweiligen Eingangsport ankommende WDM-Signal (optische Frequenzmultiplexsignal) nach Wellenlängen λ1, ..., λn (optischen Frequenzen) aufteilt. An die insgesamt maximal p·n Ausgänge der p Wellenlängen-Demultiplexer sind p·n Eingänge einer (integriert-)optischen Raumkoppelanordnung R angeschlossen. Ausgangsseitig sind an p·n Ausgänge der Raumkoppelanordnung R die jeweils n Eingänge von p Wellenlängen-Multiplexern M1, ..., Mp angeschlossen, die jeweils die ihnen zugeführten n Signale unterschiedlicher Wellenlänge (λ1, .., λn) zu einem WDM-(optischen Frequenzmultiplex-)Signal zusammenfassen und die ihrerseits zu den Ausgangsports der WDM-Koppelanordnung mit den daran angeschlossenen Ausgangsfasern A1, ..., Ap führen.

In einem zwischen zusätzlichen m·n Ausgängen und m·n Eingängen der Raumkoppelanordnung R liegenden Wellenlängen-Konverter-Pool KP sind m·n Wellenlängen-Konverter K11, ..., Knm vorgesehen, und zwar für jede der n Wellenlängen m Frequenzkonverter K11, ...; ..., Knm, wobei m ≤ p ist. In der in FIG 1 skizzierten WDM-Koppelanordnung liegen dabei in dem Fall, daß bei den Wellenlängen-Konvertern die Eingangswellenlänge variabel und die Ausgangswellenlänge fest ist, links im Bild die Eingangsports und rechts die Ausgangsports der WDM-Koppelanordnung, während bei fester Eingangswellenlänge und variabler Ausgangswellenlänge die Eingangsports rechts und die Ausgangsports links im Bild liegen. Die Zeichnung FIG 1 deckt insoweit beide Fälle ab.

Von Nachteil ist bei dieser WDM-Koppelanordnung, daß die Größe (q + p·n + m·n) × (q + p·n + m·n) der Raumkoppelanordnung R von der Anzahl m der Wellenlängen-Konverter abhängt. Es muß daher bei der Installation der WDM-Koppelanordnung bereits deren geplanter maximaler Ausbau bekannt sein; ein Aufrüsten über diesen geplanten Wert hinaus ist nicht möglich.

Da aber erst mit wachsendem Verkehrsaufkommen die Blockierwahrscheinlichkeit und damit der Bedarf an Wellenlängen-Konvertern steigen, ist ein sukzessiver Ausbau von WDM-Koppelanordnungen mit Wellenlängen-Konvertern wünschenswert, und zwar ohne daß die Freizügigkeit eines solchen Ausbaus durch inzwischen vielleicht überholte Annahmen und Planungen beeinträchtigt wird. Dabei ist nicht davon auszugehen, daß ein Wellenlängen-Konverter jede beliebige Eingangs- in jede beliebige Ausgangswellenlänge umzusetzen vermag. Es ist vielmehr anzunehmen, daß mit wirtschaftlich vertretbarem Aufwand (ohne durchstimmbare Filter und/oder Quellen) realisierbare Wellenlängen-Konverter eine beliebige Eingangs- auf eine feste Ausgangswellenlänge (bzw. umgekehrt) umsetzen werden.

Die Erfindung zeigt nun einen Weg, einen insoweit freizügigen Ausbau einer WDM-Koppelanordnung zu ermöglichen.

Die Erfindung betrifft eine WDM-Koppelanordnung mit

- eingangsseitigen, jeweils das auf der zugehörigen Eingangsfaser ankommende optische Signal nach Wellenlängen aufteilenden Wellenlängen-Demultiplexern,
- einer nachfolgenden Raumkoppelanordnung und
- ausgangsseitigen, die ihnen zugeführten Signale unterschiedlicher Wellenlängen zusammenfassenden Wellenlängen-Multiplexern sowie
- zwischen Raumkoppelanordnung und Wellenlängen-Multiplexern eingefügten, eine jeweils ankommende Wellenlänge auf die jeweilige abgehende Wellenlänge umsetzenden einstellbaren Wellenlängen-Konvertern;

diese WDM-Koppelanordnung ist erfindungsgemäß dadurch gekennzeichnet, daß zu den Wellenlängen-Multiplexern wellenlängenindividuelle Raumkoppelvielfache führen, die eingangsseitig jeweils über eine der Anzahl der Wellenlängen-Multiplexer entsprechende Anzahl von Zwischenleitungen mit entsprechenden Ausgängen der Raumkoppelanordnung verbunden sind, wobei allenfalls ein Teil der zu einem Raumkoppelvielfach führenden Zwischenleitungen die Raumkoppelanordnung unmittelbar mit dem jeweiligen Raumkoppelvielfach verbindet und in die übrigen Zwischenleitungen jeweils ein eine jeweils ankommende Wellenlänge auf die jeweilige abgehende Wellenlänge umsetzender einstellbarer Wellenlängen-Konverter eingefügt ist.

Die Erfindung bringt den Vorteil mit sich, eine - ggf. zunächst sogar ohne Wellenlängen-Konverter installierte - WDM-Koppelanordnung sukzessive mit Frequenzkonvertern versehen zu können, ohne daß damit eine Raumkoppelfeld-Vergrösserung einhergehen müsste; zugleich werden in den meisten Fällen insgesamt weniger Raumkoppelpunkte benötigt.

Weitere Besonderheiten der Erfindung werden aus der nachfolgenden näheren Erläuterung eines Ausführungsbeispiels anhand der Zeichnungen ersichtlich. Dabei zeigt

FIG 1 ein Blockschaltbild einer bekannten WDM-Koppelanordnung;

FIG 2 zeigt das Blockschaltbild eines Ausführungsbeispiels einer WDM-Koppelanordnung gemäß der Erfindung.

Die in FIG 1 dargestellte WDM-Koppelanordnung wurde oben bereits erläutert, so daß sich weitere Erläuterungen an dieser Stelle erübrigen.

In FIG 2 ist schematisch in einem zum Verständnis der Erfindung ein Ausführungsbeispiel einer WDM-Koppelanordnung skizziert, in der die Erfindung Anwendung findet. Diese WDM-Koppelanordnung weist wiederum p Eingangsports und p Ausgangsports mit daran angeschlossenen Eingangs- bzw. Ausgangsfasern E1, ..., Ep bzw. A1, ..., Ap für WDM-Signale (optische Frequenzmultiplexsignale) mit jeweils n optischen Kanälen sowie eingangs- und ausgangsseitig jeweils q Ports e1, ..., eq bzw. a1, ..., aq für einkanalige Signale auf. Die p Eingangsfasern E1, ..., Ep führen jeweils zu einem Wellenlängen-Demultiplexer D1, ..., Dp, der das am jeweiligen Eingangsport ankommende WDM-Signal (optische Frequenzmultiplexsignal) nach Wellenlängen λ1, ..., λn (optischen Frequenzen) aufteilt. An die insgesamt maximal p·n Ausgänge der p Wellenlängen-Demultiplexer sind p·n Eingänge einer (integriert-)optischen Raumkoppelanordnung R angeschlossen. Wiederum p·n Ausgänge der Raumkoppelanordnung R sind mit Wellenlängen-Multiplexern M1, ..., Mp verbunden, die jeweils die ihnen zugeführten n Signale unterschiedlicher Wellenlänge ($\lambda 1$, .., $\lambda n$) zu einem WDM-(optischen Frequenzmultiplex-)Signal zusammenfassen und die ihrerseits zu den Ausgangsports der WDM-Koppelanordnung mit den daran angeschlossenen Ausgangsfasern A1, ..., Ap führen.

In der in FIG 2 skizzierten WDM-Koppelanordnung ist es nun so, daß zu den Wellenlängen-Multiplexern M1, ..., Mp wellenlängenindividuelle Raumkoppelvielfache R1, ..., Rn führen, die eingangsseitig jeweils über eine der Anzahl der Wellenlängen-Multiplexer M1, ..., Mp entsprechende Anzahl p von Zwischenleitungen $z_1$, ..., $z_{p-m}$; $z_{p-m+1}$, ..., $z_p$ mit entsprechenden Ausgängen der Raumkoppelanordnung R verbunden sind. Dabei verbinden p-m zu einem Raumkoppelvielfach R1, .., Rn führende Zwischenleitungen $z_1$, ..., $z_{p-m}$ die Raumkoppelanordnung R unmittelbar mit dem jeweiligen Raumkoppelvielfach R1, ..., Rn, während in die übrigen m Zwischenleitungen $z_{p-m+1}$, ..., $z_p$ jeweils ein einstellbarer Wellenlängen-Konverter K11, ..., K1m; ...; Kn1, ..., Knm eingefügt ist, der eine jeweils ankommende Wellenlänge auf die jeweilige abgehende Wellenlänge umsetzt.

Der Nachteil der WDM-Koppelanordnung nach FIG 1, nämlich daß die Größe (q + pn + mn) $\times$ (q + pn + mn) ihrer Raumkoppelanordnung von der Anzahl m der Wellenlängen-Konverter abhängig ist, wird in der in FIG 2 skizzierte WDM-Koppelanordnung vermieden:

Wie FIG 2 zeigt, enthält die WDM-Koppelanordnung gemäß der Erfindung zum einen ein Koppelfeld der Größe (q +np)$\times$(q + np), nämlich die Raumkoppelanordnung R, und zum anderen n Koppelfelder der Größe p $\times$ p, nämlich die Raumkoppelvielfache R1, ..., Rn . Die Gesamtgröße der Koppelfelder ist unabhängig von der Anzahl m der jeweils installierten Wellenlängen-Konverter K11, ...; ...; Kn1, ... . Die WDM-Koppelanordnung kann zunächst ohne Frequenzkonverter installiert werden (m = 0) und sukzessive mit Wellenlängen-Konvertern aufgerüstet werden, bis in jede zwischen der Raumkoppelanordnung R und einer wellenlängenindividuellen Raumkoppelvielfachen R1, ..., Rn verlaufende Verbindungsleitung ein Wellenlängen-Konverter eingefügt ist (m = p).

Zugleich kommt die WDM-Koppelanordnung gemäß der Erfindung in den meisten Fällen mit weniger Koppelpunkten aus als die in FIG 1 umrissene bekannte WDM-Koppelanordnung. Dies ist der Fall bei

$$m > -\frac{q}{n} \cdot p + \sqrt{\left(\frac{q}{n}+p\right)\frac{p}{n}},$$

worin m die Anzahl der Wellenlängen-Konverter, n die Anzahl der jeweils im Multiplex zusammengefassten optischen Kanäle, p die Anzahl der WDM-Eingangs- bzw. -Ausgangsports der WDM-Koppelanordnung und q die Anzahl der Einzelkanal-Eingangs- bzw. -Ausgangsports der WDM-Koppelanordnung bedeuten. Die Einsparung an Koppelpunkten kann dabei recht beträchtlich sein; für beispielsweise m = 12, n = 8, p = 16, q = 2 beträgt sie 63 %.

Abschliessend sei noch besonders bemerkt, daß auch in der in FIG 2 skizzierten WDM-Koppelanordnung gemäß der Erfindung bei den Wellenlängen-Konvertern K11, ..., Knm die Eingangswellenlänge variabel und die Ausgangswellenlänge fest sein kann oder umgekehrt die Eingangswellenlänge fest und die Ausgangswellenlänge variabel.

Der erstere Fall variabler Eingangswellenlänge und fester Ausgangswellenlänge wurde oben bereits anhand der Zeichnung FIG 2 erläutert; die Eingangsports der in FIG 2 skizzierten WDM-Koppelanordnung liegen dabei links im Bild und die Ausgangsports rechts.

Im umgekehrten Falle, nämlich wenn bei den Wellenlängen-Konvertern K11, ..., Knm die Eingängswellenlänge fest und die Ausgangswellenlänge variabel ist, liegen die Eingangsports rechts und die Ausgangsports links im Bild; zugleich vertauschen Wellenlängen-Demultiplexer und Wellenlängen-Multiplexer ihre Rolle:

Auf die auch diesen Fall abdeckende Zeichnung FIG 2 gelesen, weist die WDM-Koppelanordnung dann p Eingangsports mit daran angeschlossenen Eingangsfasern A1, .., Ap und p Ausgangsports mit daran angeschlossenen Ausgangsfasern E1, .., Ep für WDM-Signale (optische Frequenzmultiplexsignale) mit jeweils n optischen Kanälen sowie eingangsseitig q Ports a1, ..., aq und ausgangsseitig q Ports e1, ..., eq für einkanalige Signale auf. Die p Eingangsfasern A1, ..., Ap führen jeweils zu einem Wellenlängen-Demultiplexer M1, ..., Mp, der das am jeweiligen Eingangsport ankommende WDM-Signal (optische Frequenzmultiplexsignal) nach Wellenlängen $\lambda 1$, ..., $\lambda n$ (optischen Frequenzen) aufteilt. Die Wellenlängen-Demultiplexer M1 ..., Mp führen zu wellenlängenindividuellen (integriert-)optischen Raumkoppelvielfachen R1, ..., Rn, die ausgangsseitig jeweils über eine der Anzahl der Wellenlängen-Demultiplexer M1, ..., Mp entsprechende Anzahl p von Zwischenleitungen $z_1$, .., $z_{p-m}$; $z_{p-m+1}$, ..., $z_p$ mit entsprechenden Eingängen einer (integriert-)optischen Raumkoppelanordnung R verbunden sind. Dabei verbinden p-m von einem Raumkoppelvielfach R1, ..., Rn aus weiterführende Zwischenleitungen $z_1$, ..., $z_{p-m}$ das jeweilige Raumkoppelvielfach R1, ..., Rn unmittelbar mit der Raumkoppelanordnung R, während in die übrigen m Zwischenleitungen $z_{p-m+1}$, ..., $z_p$ jeweils ein einstellbarer Wellenlängen-Konverter K11, ..., K1m; ...; Kn1, ..., Knm eingefügt ist, der die jeweilige ankommende Wellenlänge auf eine jeweils abgehende Wellenlänge umsetzt. An wiederum p·n Ausgänge der Raumkoppelanordnung R sind Wellenlängen-Multiplexer D1, ..., Dp angeschlossen, die jeweils die ihnen zugeführten n Signale unterschiedlicher Wellenlänge ($\lambda 1$, .., $\lambda n$) zu einem WDM-(optischen Frequenzmultiplex-)Signal zusammenfassen und die ihrerseits zu den Ausgangsports der WDM-Koppelanordnung mit den daran angeschlossenen Ausgangsfasern E1, ..., Ep führen.

**Patentansprüche**

1.  WDM-Koppelanordnung mit

    -   eingangsseitigen, jeweils das auf der zugehörigen Eingangsfaser (E1, ..., Ep) ankommende optische Signal nach Wellenlängen ($\lambda$1, ..., $\lambda$n) aufteilenden Wellenlängen-Demultiplexern (D1, ..., Dp),
    -   einer nachfolgenden Raumkoppelanordnung (R) und
    -   ausgangsseitigen, die ihnen zugeführten Signale unterschiedlicher Wellenlängen ($\lambda$1, ..., $\lambda$n) zusammenfassenden Wellenlängen-Multiplexern (M1, ..., Mp) sowie
    -   zwischen Raumkoppelanordnung (R) und Wellenlängen-Multiplexern (M1, ..., Mp) liegenden, eine jeweils ankommende Wellenlänge auf die jeweilige abgehende Wellenlänge umsetzenden einstellbaren Wellenlängen-Konvertern (K11, ..., Knm),

    **dadurch gekennzeichnet,**
    **daß** zu den Wellenlängen-Multiplexern (M1, ..., Mp) wellenlängenindividuelle Raumkoppelvielfache (R1, ..., Rn) führen, die eingangsseitig jeweils über eine der Anzahl der Wellenlängen-Multiplexer (M1, ..., Mp) entsprechende Anzahl (p) von Zwischenleitungen ($z_1$, ..., $z_{p-m}$; $z_{p-m+1}$, ..., $z_p$) mit entsprechenden Ausgängen der Raumkoppelanordnung (R) verbunden sind, wobei allenfalls ein Teil der zu einem Raumkoppelvielfach (R1, .., Rn) führenden Zwischenleitungen ($z_1$, ..., $z_{p-m}$) die Raumkoppelanordnung (R) unmittelbar mit dem jeweiligen Raumkoppelvielfach (R1, ..., Rn) verbindet und in die übrigen Zwischenleitungen ($z_{p-m+1}$, ..., $z_p$) jeweils ein eine jeweils ankommende Wellenlänge auf die jeweilige abgehende Wellenlänge umsetzender einstellbarer Wellenlängen-Konverter (K11, ..., K1m; ...; Kn1, ..., Knm) eingefügt ist.

2.  WDM-Koppelanordnung mit

    -   eingangsseitigen, jeweils das auf der zugehörigen Eingangsfaser (A1, ..., Ap) ankommende optische Signal nach Wellenlängen ($\lambda$1, ..., $\lambda$n) aufteilenden Wellenlängen-Demultiplexern (M1, ..., Mp),
    -   einer nachfolgenden Raumkoppelanordnung (R) und
    -   ausgangsseitigen, die ihnen zugeführten Signale unterschiedlicher Wellenlängen ($\lambda$1, ..., $\lambda$n) zusammenfassenden Wellenlängen-Multiplexern (D1, ..., Dp) sowie
    -   einstellbaren Wellenlängen-Konvertern (K11, ..., Knm),

    **dadurch gekennzeichnet,**

**daß** die Wellenlängen-Demultiplexer (M1, ..., Mp) zu wellenlängenindividuellen Raumkoppelvielfachen (R1, ..., Rn) führen, die ausgangsseitig jeweils über eine der Anzahl der Wellenlängen-Demultiplexer (M1, ..., Mp) entsprechende Anzahl p von Zwischenleitungen ($z_1$, ..., $z_{p-m}$; $z_{p-m+1}$, ..., $z_p$) mit entsprechenden Eingängen einer Raumkoppelanordnung (R) verbunden sind, an deren Ausgänge die Wellenlängen-Multiplexer (D1, ..., Dp) angeschlossen sind, wobei allenfalls ein Teil der von einem Raumkoppelvielfach (R1, .., Rn) aus weiterführenden Zwischenleitungen ($z_1$, ..., $z_{p-m}$) das jeweilige Raumkoppelvielfach (R1, ..., Rn) unmittelbar mit der Raumkoppelanordnung (R) verbindet und in die übrigen Zwischenleitungen ($z_{p-m+1}$, .., $z_p$) jeweils ein die jeweilige ankommende Wellenlänge auf eine jeweils abgehende Wellenlänge umsetzender einstellbarer Wellenlängen-Konverter (K11, ..., K1m; ...; Kn1, ..., Knm) eingefügt ist.

**Claims**

1.  WDM switching network comprising

    -   input WDM demultiplexers (D1, ..., Dp) which in each case divide the incoming optical signal from the associated input fiber (E1, ..., Ep) in accordance with wavelengths ($\lambda$1, ..., $\lambda$n),
    -   followed by a space switch (R) and
    -   output WDM multiplexers (M1, ..., Mp) combining the signals of different wavelengths ($\lambda$1, ..., $\lambda$n) supplied to them, and
    -   adjustable wavelength converters (K11, ..., Knm) which are located between space switch (R) and WDM multiplexers (M1, ..., Mp) and convert a respective incoming wavelength to the respective outgoing wavelength,

    **characterized in that** wavelength-individual space switching matrices (R1, .., Rn), which, at the input end, are in each case connected via a number (p), corresponding to the number of WDM multiplexers (M1, ..., Mp), of link lines ($z_1$, ..., $z_{p-m}$; $z_{p-m+1}$, ..., $z_p$) are connected to corresponding outputs of the space switch (R), lead to the WDM multiplexers (M1, ..., Mp), in which arrangement, at the best, some of the link lines ($z_1$, ..., $z_{p-m}$) leading to a space switching matrix (R1, .., Rn) directly connect the space switch (R) to the respective space switching matrix (R1, ..., Rn) and an adjustable wavelength converter (K11, ..., K1m, ...; Kn1, ..., Knm), which converts a respective incoming wavelength to the respective outgoing wavelength, is in each case inserted into the remaining link lines ($z_{p-m+1}$, ..., $z_p$).

2.  WDM switching network comprising

- input wavelength demultiplexers (M1, ..., Mp), which in each case divide the incoming optical signal from the associated input fiber (A1, ..., Ap) in accordance with wavelengths ($\lambda$1, ..., $\lambda$n),
- followed by a space switch (R) and
- output WDM multiplexers (D1, ..., Dp), combining the signals of different wavelengths ($\lambda$1, ..., $\lambda$n) supplied to them, and
- adjustable wavelength converters (K11, ..., Knm),

**characterized in that** the WDM demultiplexers (M1, ..., Mp) lead to wavelength-individual space switching matrices (R1, ..., Rn) which, at the output end, are in each case connected via a number p, corresponding to the number of WDM demultiplexers (M1, ..., Mp), of link lines ($z_1$, ..., $z_{p-m}$; $z_{p-m+1}$, ..., zp), to corresponding inputs of a space switch (R), to the outputs of which the WDM multiplexers (D1, ..., Dp) are connected, in which arrangement, at the best, some of the link lines ($z_1$, ..., $z_{p-m}$) continuing from a space switching matrix (R1, ..., Rn), directly connect the respective space switching matrix (R1, ..., Rn) to the space switch (R), and a wavelength converter (K11, ..., K1m; ...; Kn1, ..., Knm), which converts the respective incoming wavelength to a respective outgoing wavelength, is in each case inserted into the remaining link lines ($z_{p-m+1}$, ..., $z_p$).

**Revendications**

1. Système de couplage MRL, comprenant

   - des démultiplexeurs en longueur d'onde (D1, ..., Dp) situés sur le côté d'entrée qui procèdent à chaque fois à la répartition par longueur d'onde ($\lambda$1, ..., $\lambda$n) du signal optique arrivant sur la fibre d'entrée associée (E1, ..., Ep),
   - un système de couplage spatial (R) placé en aval et
   - des multiplexeurs en longueur d'onde (M1, ..., Mp) situés sur le côté de sortie qui regroupent les signaux de longueurs d'onde différentes ($\lambda$1, ..., $\lambda$n) qui leur sont amenés, ainsi que
   - des convertisseurs de longueur d'onde réglables (K11, ..., Knm) situés entre le système de couplage spatial (R) et les multiplexeurs en longueur d'onde (M1, ..., Mp) et qui convertissent une longueur d'onde entrante respective en la longueur d'onde sortante respective,

   **caractérisé en ce que** des autocommutateurs spatiaux en longueur d'onde individuelle (R1, ..., Rn) conduisent aux multiplexeurs en longueur d'onde (M1, ..., Mp), lesquels autocommutateurs sont reliés à chaque fois, sur le côté d'entrée, à des sorties correspondantes du système de couplage spatial (R) par le biais d'un nombre (p) de lignes intermédiaires ($z_1$, ..., $z_{p-m}$ ; $z_{p-m+1}$, ..., $z_p$) correspondant au nombre des multiplexeurs en longueur d'onde (M1, ..., Mp), tout au plus une partie des lignes intermédiaires ($z_1$, ..., $z_{p-m}$) qui conduisent à un autocommutateur spatial (R1, ..., Rn) reliant le système de couplage spatial (R) directement à l'autocommutateur spatial (R1, ..., Rn) respectif et un convertisseur de longueur d'onde réglable (K11, ..., K1m ; ... ; Kn1, ..., Knm) qui convertit une longueur d'onde entrante respective en la longueur d'onde sortante respective étant inséré à chaque fois dans les lignes intermédiaires restantes ($z_{p-m+1}$, ..., $z_p$).

2. Système de couplage MRL, comprenant

   - des démultiplexeurs en longueur d'onde (M1, ..., Mp) situés sur le côté d'entrée qui procèdent à chaque fois à la répartition par longueur d'onde ($\lambda$1, ..., $\lambda$n) du signal optique arrivant sur la fibre d'entrée associée (A1, ..., Ap),
   - un système de couplage spatial (R) placé en aval et
   - des multiplexeurs en longueur d'onde (D1, ..., Dp) situés sur le côté de sortie qui regroupent les signaux de longueurs d'onde différentes ($\lambda$1, ..., $\lambda$n) qui leur sont amenés, ainsi que
   - des convertisseurs de longueur d'onde réglables (K11, ..., Knm)

   **caractérisé en ce que** les démultiplexeurs en longueur d'onde (M1, ..., Mp) conduisent à des autocommutateurs spatiaux en longueur d'onde individuelle (R1, ..., Rn) qui sont reliés à chaque fois, sur le côté de sortie, par le biais d'un nombre p de lignes intermédiaires ($z_1$, ..., $z_{p-m}$; $z_{p-m+1}$, ..., $z_p$) correspondant au nombre des démultiplexeurs en longueur d'onde (M1, ..., Mp), à des entrées correspondantes d'un système de couplage spatial (R) aux sorties duquel sont reliés les multiplexeurs en longueur d'onde (D1, ..., Dp), tout au plus une partie des lignes intermédiaires ($z_1$, ..., $z_{p-m}$) qui poursuivent le trajet depuis un autocommutateur spatial (R1, ..., Rn) reliant l'autocommutateur spatial (R1, ..., Rn) respectif directement au système de couplage spatial (R) et un convertisseur de longueur d'onde réglable (K11, ..., K1m; ...; Kn1, ..., Knm) qui convertit la longueur d'onde entrante respective en une longueur d'onde sortante respective étant inséré à chaque fois dans les lignes intermédiaires restantes ($z_{p-m+1}$, ..., $z_p$).

FIG 1

FIG 2